Europäisches Patentamt

European Patent Office

Office européen des brevets

(11) Publication number: 0 326 649 A2

## (12) EUROPEAN PATENT APPLICATION

(21) Application number: 88115703.6

(22) Date of filing: 23.09.88

(51) Int. Cl.⁴: H01G 4/06 , H01B 11/18

(30) Priority: 04.02.88 US 152111

(43) Date of publication of application:
09.08.89 Bulletin 89/32

(84) Designated Contracting States:
DE FR GB

(71) Applicant: Hewlett-Packard Company
3000 Hanover Street
Palo Alto California 94304(US)

(72) Inventor: Swerlein, Ronald L.
2404 Sunset Drive
Longmont, CO. 80501(US)

(74) Representative: Liesegang, Roland, Dr.-Ing. et
al
FORRESTER & BOEHMERT
Widenmayerstrasse 4
D-8000 München 22(DE)

(54) Shielded low dielectric absorbtion capacitor.

(57) A shielded low dielectric absorbtion capacitor (1)
is produced using the capacitance between the cen-
ter conductor (6) and outer shield of a length of
coaxial cable (2) having a dielectric (5) made from
TFE (Teflon).

FIG 1

EP 0 326 649 A2

# SHIELDED LOW DIELECTRIC ABSORBTION CAPACITOR

## Background and Summary of the Invention

From time to time a circuit designer has a need for a capacitor whose value of capacitance is stable and that has a very low amount of dielectric absorbtion. Teflon is a preferred dielectric material for capacitors with low amounts of dielectric absorbtion, but can present fabrication difficulties. For example, when a sheet of teflon and two foil plates are rolled into a conventional tubular capacitor, some means must be used to clinch the rolled assembly to prevent it from unrolling. Since teflon is slippery it is common to use some form of end caps to keep the rolled foil and dielectric in place within the tube, as well as to anchor the leads. This can be a satisfactory solution for capacitors of fairly large value (e.g., .001 ufd), but presents certain difficulties for small-valued capacitors of, say, around one hundred picofarads. For example, the material used to form the end caps of a conventional capacitor contributes significantly to the capacitance of a one hundred picofarad capacitor. In itself that is not harmful, but the material used to make the end caps can add a considerable amount of dielectric absorbtion, and in some cases, even become the dominant source of dielectric absorbtion in the capacitor.

Conventional techniques of capacitor fabrication allow another source of dielectric absorbtion. Consider a conventional foil capacitor. There, two sheets of foil are separated by a sheet of dielectric material and rolled into a cylinder. One of the sheets of foil will be on the outside of the cylinder; the connecting terminal or lead for that sheet is generally marked on the body of the capacitor. Even if that outside sheet of foil is connected to a suitable ground potential (whether AC or DC), there is still some significant degree of coupling between the edges of the inside foil and other circuit elements not at the suitable ground potential. The electric field that accompanies that coupling can pass through materials that adjoin the capacitor and that have poor dielectric absorbtion. The result is a shunting stray capacitance that can seriously degrade the dielectric absorbtion of the conventional tubular foil capacitor.

A solution to the problem of fabricating a small-valued capacitor with low dielectric absorbtion is to form the capacitor out of a suitable length of coaxial cable having an extruded TFE teflon dielectric (i.e, "pure teflon"). Since the capacitor is fabricated from a length of coaxial cable no end caps are needed in its mechanical construction. Eliminating the end caps eliminates the extra dielectric absorbtion they ential. Furthermore, a coaxial cable has no lengthy inside foil that has edges coupled to other circuit elements. Instead, it has only the cross sectional area of the center conductor, plus whatever lead length is exposed in order to make connections.

At a distant end the shield of the coaxial cable is stripped back a short distance to avoid shorts between the shield and the center conductor, which itself is cut flush with a protruding length of the dielectric sheath. At the near end the shield is exposed and clinched to a crimped strain relief/solder lug, while the dielectric sheath and center conductor proceed therethrough. A stripped portion of the center conductor and the solder lug serve as the terminals of the resulting capacitor.

As an illustration of the superior low dielectric absorbtion afforded by the invention, note that the best available conventional teflon 100 pfd capacitor has a dielectric absorbtion of 200 ppm. In contrast, a capacitor constructed in accordance with the description that follows has a dielectric adsorbtion of only 20 ppm.

## Description of the Drawing

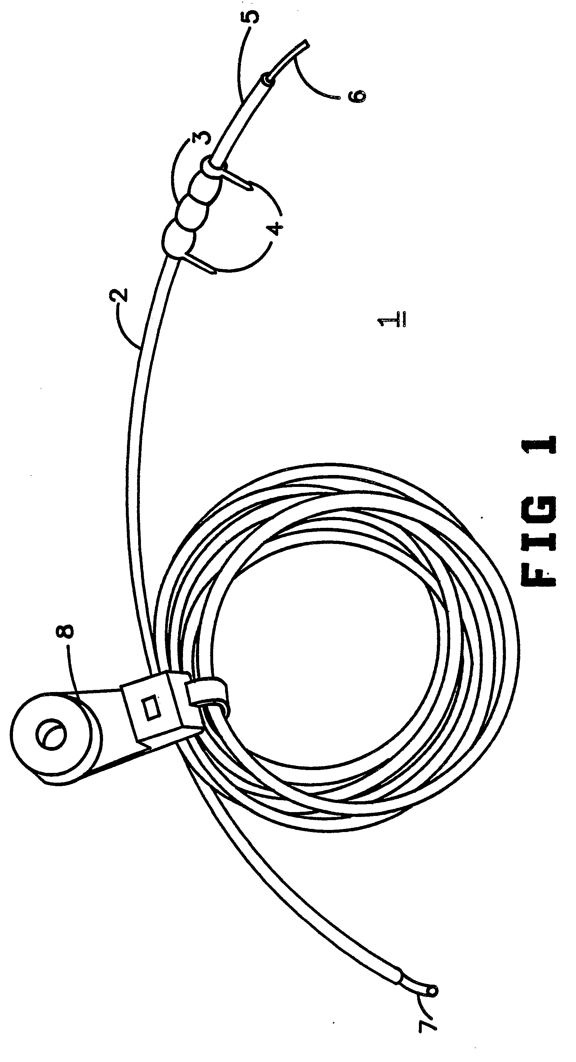

Figure 1 is a perspective view of a stable low dielectric absorbtion capacitor constructed in accordance with the principles of the invention.

## Description of a Preferred Embodiment

Referring now to the Figure, shown therein is a low dielectric absorbtion capacitor 1 formed from a length of coaxial cable having a teflon dielectric. In the present instance a capacitor having a value of one hundred picofarads was needed. This value of capacitance is obtained with approximately eighteen inches of coaxial cable whose details of internal construction may be summarized as follows:

1. A single center conductor of 22 AWG (19x34), silver-plated copper.

2. Center conductor insulation of type E extruded teflon (TFE).

3. A shield of single braid, silver-plated copper, with 90% minimum coverage.

4. A jacket of extruded FEP telfon, rated at 200 deg. C.

5. The respective diameters of the center conductor, center conductor insulation, shield, and jacket are .026", .046", .071" and .091".

Such coaxial cable is available from a number of vendors, including the Alpha Wire Corp. and the Tensolite Div. of Carlisle Corp., and has a breakdown voltage rating of at least 600 volts RMS.

As shown in the Figure, the coaxial cable 2 is conveniently coiled, with the coils clinched by a cable tie 8, whose mounting hole allows the capacitor 1 to be securely affixed to a surface in the assembly utilizing the capacitor 1. At a free end of the coiled coaxial cable 2 a lug 3 is crimped onto the shield (not itself shown). The lug 3 includes two solder legs 4, through which connection is made to one side of the capacitor 1. Prior to attaching lug 3 the shield is stripped back a convenient amount to reveal a length 5 of the dielectric insulation covering the center conductor. The end of that center conductor is stripped, and connection to the other side of the capacitor is made to the center conductor 6 at that stripped end.

At the far end 7 of the cable 2 the shield is also stripped back a short distance, say, an eigth of an inch, and the center conductor trimmed flush with the end of the exposed dielectric insulation. This prevents short circuits between the cneter conductor and the shield.

# Claims

1. A capacitor (1) having low dielectric absorption, **characterized** by a length of coaxial cable (2) having a center conductor (6), a dielectric (5) made from TFE (Teflon) and means (3) for electrical connection to the center conductor (6) and to the shield of the coaxial cable.

FIG 1

EP 0 326 649 A2